# EUROPEAN PATENT SPECIFICATION

(11) **EP 3 395 210 B1**
(45) Date of publication and mention of the grant of the patent: **14.08.2024**
(21) Application number: 18169667.5
(22) Date of filing: 26.04.2018
(51) Int. Cl.: A47J 31/06, A47J 31/46

(54) **DEVICE FOR PREPARING A COFFEE PRODUCT**
VORRICHTUNG ZUR ZUBEREITUNG EINES KAFFEEPRODUKTS
DISPOSITIF POUR LA PRÉPARATION D'UN PRODUIT À BASE DE CAFÉ

(30) Priority: 28.04.2017 NL 2018804
(43) Date of publication of application: 31.10.2018
(73) Proprietor: J.M. de Jong Duke Automatenfabriek B.V., 3364 AA Sliedrecht (NL)
(72) Inventor: BRIJDER, Eduard Adri, 4207 TV Gorinchem (NL); DE GROEN, Cornelis, 3342 BT Hendrik Ido Ambacht (NL)
(74) Representative: Jilderda, Anne Ayolt

(56) References cited:
- CA-A1- 2 998 560
- DE-U1- 202006 014 317
- DE-U1- 202006 014 317
- GB-A- 2 469 873
- US-A1- 2010 064 900

## Description

The present invention relates to a device for preparing a coffee product, comprising a preparation chamber which is intended and configured to receive and collect a quantity of ground coffee in a coffee bed, and provided with pump means for carrying hot water under increased pressure to the preparation chamber, wherein the preparation chamber is provided with a water inlet for admitting water at increased temperature and pressure on a feed side of the coffee bed, wherein the preparation chamber is provided with an outlet on a discharge side beyond the coffee bed, wherein the outlet is coupled via a product conduit to an outflow at which the coffee product can be taken away, and wherein the device is provided with an electronic control system which imposes a preparation cycle each time a product is prepared.

Such a device finds widespread application, for instance for household use, in an office environment or in a hospitality establishment. The device can optionally be provided here with a coffee grinder to which a bean reservoir for coffee beans is coupled, or comprise a holder for ground coffee. During the preparation cycle ground coffee is in both cases introduced into the preparation chamber and compressed to a coffee bed between two chamber bottoms. Hot water is then pressed under high pressure through the coffee bed in order to supply an extract for the desired coffee product. At the end of the preparation cycle the preparation chamber is thus released from the thus spent coffee and the preparation chamber is restored to its initial state. A device for preparing a coffee product according to the preamble of claim 1 is disclosed in CA 2 998 560 A1.

The product received at the outflow can vary in quality and composition in accordance with the amount of coffee, the grind size and the compactness of the coffee bed after it has been pressed. It is nevertheless normally the intention per type of coffee product to produce a constant quality and composition wherein such unintended fluctuations are therefore undesirable. It would in addition be desirable to be able to prepare diverse coffee products with the same device.

The present invention has for its object, among others, to provide a device for preparing a coffee product which fulfils one or more of these wishes.

In order to achieve the stated object a device for preparing a coffee according to claim 1 is provided. Preferred embodiments of the invention are the subject-matter of the dependent claims.

The invention is based here on the insight that during the preparation of a coffee product, in addition to the pressure and the temperature of the hot water, the retention time is also an important parameter for the final composition and quality of the product. At a given pump setting the pressure and retention time are determined by the resistance of the overall decoction system. By applying an adjustable restriction, and likewise resistance, in the outlet conduit of the preparation chamber this total resistance is no longer determined solely by the resistance of the coffee bed. Relatively small fluctuations in for instance the amount of dosed coffee, a possible pressing force on the coffee bed and the grind size or quality of the ground coffee, which would otherwise affect the pressure and the retention time significantly, thus become (relatively) less important factors. Applying an additional resistance in the system does after all make that of the coffee bed less important for the overall result. The invention hereby contributes toward a stable coffee quality of the end product.

By means of such a valve device with an adjustable restriction it is moreover possible to regulate the resistance of the system during preparation of the product. Disruptive influences, such as the above described almost inevitable fluctuations in the coffee bed, can thus be compensated. A preferred embodiment of the device has in this context the feature according to the invention that a flow sensor is provided therein in order to measure a magnitude of a volume flow of the product and to generate this as electronic value to the control system, wherein the control system regulates the restriction subject to the measured magnitude of the volume flow. Such a sensor can also be received directly in the outlet product conduit to the outflow instead of in the supply conduit for fresh water. A further particular embodiment of the device according to the invention therefore has the feature that the flow sensor is received between the outlet and the outflow in the product conduit. On the basis of the thus measured value of the product volume flow rate the control system opens the adjustable restriction to greater or lesser extent in accordance with a control value for the relevant product to be prepared prestored in a memory of the control system. Because of the controllable restriction in the system the control system is thus able to regulate and control both the (counter-)pressure and retention time on the basis of the detected volume flow during dispensing of the product. It is possible here if desired to allow different profiles in accordance with a selection of the user, for instance coffee under low pressure for a milder taste similar to conventional filter coffee, as well as coffee under high (counter-)pressure for preparing an Italian espresso. A greater volume flow will normally take place at lower pressure, whereby the preparation time is moreover appreciably shortened. This provides for a relatively large amount of coffee in a relatively short time.

According to the invention, the valve device comprises the smallest passage in a liquid channel between a valve member and a valve housing, wherein a flow resistance of the liquid channel is controllable by the control system through an adjustment of the valve member relative to the valve housing. The resistance of the channel, and thereby the counter-pressure exerted by the channel, can thus be varied by such an adjustment of the valve member. This resistance depends on both a length and a cross-section of the channel and can therefore be made adjustable via either of these dimensions or via both by pinching the channel to greater or lesser extent or by lengthening or shortening the channel.

A particular embodiment of the device according to the invention has the feature that the valve member comprises a conical needle received fittingly in a passage opening of the valve housing, which needle is axially movable relative to the passage opening and is coupled for this purpose to an actuator controlled by the control system, and in a first extreme position at least substantially fully closes the passage opening and in a second extreme position leaves the passage opening at least substantially clear. The movement of the needle is driven and controlled automatically here by the control system which sets the actuator into operation accordingly. The needle can for instance be driven outward here subject to a detected volume flow in the device either upstream of the preparation chamber or downstream thereof.

In a further particular embodiment the device according to the invention has the feature here that the needle extends axially from a screw spindle which is received in an at least substantially complementary threaded cavity, wherein the screw spindle is coupled to an output shaft of an electric motor, in particular a stepping motor. By imparting more or fewer rotations to the spindle in the threaded cavity the needle coupled thereto can thus be carried axially further or less far into the passage, whereby the flow resistance of the restriction is adjustable. A preferred embodiment of the device has the feature here that an axially adjustable shaft part of adaptive length is provided between the screw spindle and the output motor shaft. The actuator can thus remain stationary irrespective of the depth of penetration of the spindle into the threaded cavity, this being an important advantage from a structural viewpoint.

According to the invention the valve housing comprises a valve cavity and the valve member a valve body received close-fittingly therein, such that the liquid channel is formed between an inner wall of the receiving cavity and an outer wall of the valve body, and that the valve body is adjustable relative to the receiving cavity. Through an axial translation and/or a radial rotation of the valve member in the valve cavity the channel can be left clear to greater or lesser extent here between an inlet and an outlet of the valve device, and the resistance of the channel can thus be set as required by the control system. According to the invention the liquid channel extends in at least one groove in at least one of the inner wall of the valve cavity and the outer wall of the valve body received therein.

In a first further particular embodiment the device according to the invention is characterized in that a length of the channel is adjustable by an axial movement of the valve body to a position at least partially outside the valve cavity. The length of the restriction imposed on the product flow by the channel can thus be shortened, and the resistance thereof thereby reduced, by driving the valve body out of the valve cavity so that the path which the product flow must follow through the relatively narrow channel becomes shorter. A preferred embodiment of the device according to the invention has the feature here that the valve body comprises a cylinder body and that the groove runs helically in the outer wall thereof. Such a helical groove has a comparatively great length per running length of the valve body. A small adjustment of the valve body to a position outside the valve cavity hereby already has a significant influence on the resistance of the channel. The valve device can hereby be given a relatively compact form.

In a second further particular embodiment the device according to the invention has the feature that the groove extends from an outer end of the valve body in axial direction over at least a part of a length of the valve body in the outer wall thereof and narrows in doing so. The device according to the invention is more particularly characterized here in that the groove is V-shaped in both a lateral section and a cross-section and widens toward the outer end. Driving the valve body outside the valve cavity here will not particularly shorten the channel but rather narrow the smallest active section thereof as a result of the narrowing nature of the groove. The flow resistance of the valve device will hereby increase significantly.

A further preferred embodiment of the device according to the invention is characterized in that the restriction is at least substantially fully opened at least briefly within the preparation cycle. The restriction is at least substantially fully opened here for instance at the end of each preparation cycle so that a substantially unobstructed passage is obtained.

In the case of a controllable needle this means that the needle is moved out of the passage, whereby a relatively large opening is created. The risk of blockage of the previously relatively narrow passage as a result of coffee residue left behind therein can thus be limited to a minimum.

The device according to the invention likewise allows more variation in the preparation cycle of the coffee product. The invention particularly allows the system pressure and retention time to be varied during a preparation cycle in order to thus realize a different and/or better coffee quality. A further particular embodiment of the device according to the invention has for this purpose the feature that the control system imposes on the restriction a number of predetermined positions, each for a specific period of time, during a preparation cycle. Not just one pump pressure is thus imposed for a coffee product, on the contrary a pressure profile is implemented with a number of steps and associated step durations.

A particular embodiment of the device according to the invention more particularly has the feature that the control system comprises an electronic memory in which at least a recipe is stored which is retrievable by the control system and which defines the positions and an associated time duration within the preparation cycle. It is possible here to define different coffee products in terms of for instance dispensing quantity, retention time and pump pressure, among other parameters, and store them as recipes in the control system. The preparation of a coffee product is hereby raised to a higher level with such a device.

A further particular embodiment of the device has the feature here according to the invention that the control system comprises a user interface which enables a user to select a recipe from a number of recipes and assign this to the control system. This embodiment provides the user with an option of selecting a coffee product as desired and having it prepared by the device.

The invention will be further elucidated below on the basis of an exemplary embodiment and an accompanying drawing. In the drawing:
- figure 1: shows schematically a structure of an exemplary embodiment of a device according to invention;
- figure 2: is a detail drawing of an embodiment of an adjustable valve device as applied in the device of figure 1;
- figures 3A-B: show cross-sections of the valve device of figure 2 in various positions;
- figure 4: shows in cross-section a second embodiment of an adjustable valve device as can be applied in the device of figure 1;
- figures 5A-D: show the valve device of figure 4 in different positions;
- figures 6A-C: show perspective views of a further embodiment of an adjustable valve device as can be applied in the device of figure 1 in different positions;
- figure 6D: shows a cross-section of the adjustable valve device of figures 6A-6C at successive stages with a passage increasing in size; and
- figure 7: is a detail drawing of the valve member of the valve device of figures 6A-6D.

It is otherwise noted here that the figures are purely schematic and not all drawn to (the same) scale. Some dimensions in particular may be exaggerated to greater or lesser extent for the sake of clarity. Corresponding parts are designated in the figures with the same reference numeral.

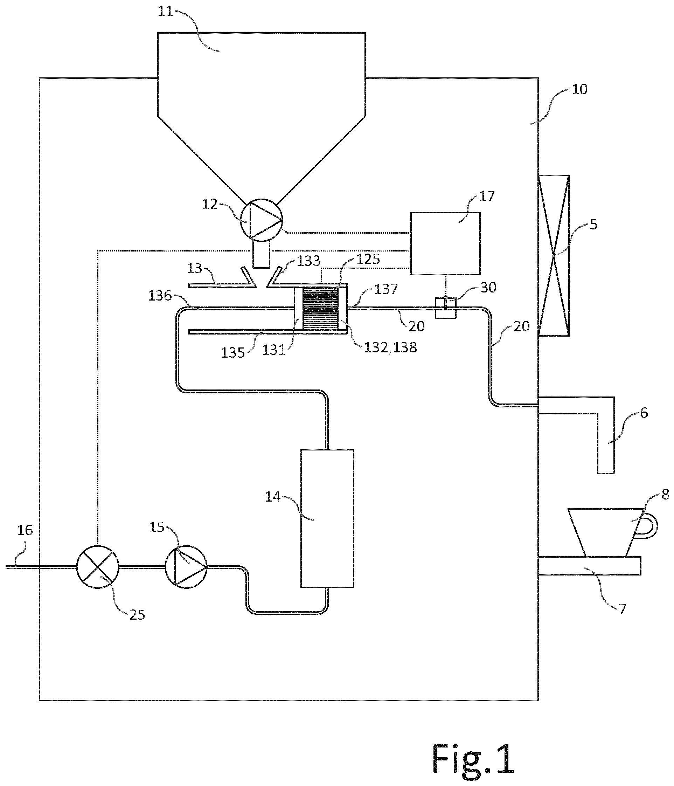

Figure 1 shows a general structure of a device for preparing a coffee product under pressure from a coffee grind. Such a device is usually also referred to as a fully automatic espresso machine. The device comprises a compact housing 10 with a control panel 5 for a user with which the user can enter a number of selections, and an outflow 6 above a cup platform 7 from which the user can take a selected coffee product 8. This coffee product varies for instance from relatively strong, referred to as ristretto/espresso, to relatively diluted, referred to as coffee or lungo.

In the shown embodiment the device comprises a fixed water connection 16 for connection to a water mains, but can instead also be equipped with a water reservoir which must in that case be periodically refilled. An electronic flow sensor 25 continuously measures a liquid flow in the system and the admission of fresh water adjusted thereto. The device further comprises a bean reservoir 11 which debouches into a mouth of a coffee grinder 12 accommodated inside a housing 10 of the device. Instead of a single bean reservoir 11, the device can also be embodied with a number of bean reservoirs, for instance two, optionally each having a separate coffee grinder 12, each with a different type of coffee or solely for the purpose of increasing the supply in the machine. And instead of or in addition to being set for unground coffee beans, the device can also be set for processing ground coffee, in which case a coffee grinder can be omitted from the device. In addition, one or more additional reservoirs can optionally be provided in the housing for holding related soluble products which are introduced into the product to be prepared, such as for instance sugar, powdered milk (topping) and/or chocolate powder.

The device is controlled fully automatically by a central control system 17 which imposes a specific operating time on coffee grinder 12 and thus defines a coffee dosage. Via a filling opening 133 in a wall of a preparation unit 13 this dosage of ground coffee slides into a cylindrical preparation chamber 135 which is bounded on either side by opposite chamber bottoms 131,132. A first of the two chamber bottoms 131 is axially movable here in preparation chamber 135 to a position beyond filling opening 133 in order to thereby compress the received coffee powder 125 to a compact coffee bed 139. Also provided therein is an inlet 136 for hot water guided under increased pressure by means of a pump 15 from a boiler 14 or via throughflow heating to preparation chamber 135 and through coffee bed 125. The opposite chamber bottom 132 comprises a screen 138 which prevents coffee powder being able to escape from the preparation chamber. The opposite chamber wall 132 further comprises an outlet 137 which is connected via an outlet product conduit 20 to outflow 6 on the outer side of housing 10. At outflow 6 a coffee product extracted in the preparation chamber can be taken away, optionally supplemented with one or more of the above mentioned additives such as sugar and milk (powder). At the end of a preparation cycle the spent coffee bed 125 is ejected from preparation chamber 135 and preparation unit 13 is restored to its original initial state, ready for a subsequent preparation cycle.

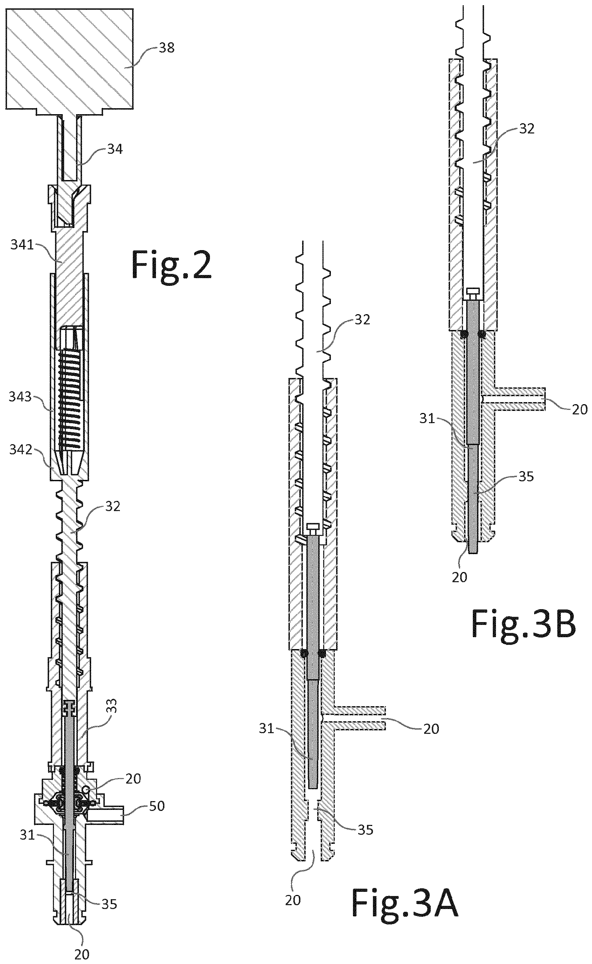

A liquid pressure build-up of the liquid in the system during a preparation cycle depends on the flow resistance, and thereby the counter-pressure, in the device. This is determined in the first instance by the resistance of the compressed coffee bed 125 and hereby depends on the dosed quantity of coffee, the grind size (fineness) and the compactness of the bed (pressure force). In order that intended or unintended variations in one or more of these parameters have less influence on the final coffee quality, a controllable valve device 30 with an adjustable restriction therein is received in the outlet conduit 20 of the preparation chamber. This valve device 30 is shown in further detail in figure 2 and in cross-section in figures 3A and 3B. A passage thereof is proportionally adjustable and controllable by control system 17.

Valve 30 is controlled during a preparation cycle from central control system 17 which also controls the other components of the system, such as for instance coffee grinder 12 and the preparation unit (decoction group) 13. The electronic flow sensor 25 is also coupled here to control system 17 in order to measure and generate an actual magnitude of the volume flow in the system as value to control system 17. A suchlike or similar sensor can also be received directly in the outlet product conduit 20 instead of in the supply conduit for fresh water. Control system 17 opens valve 30 to greater or lesser extent on the basis of the thus measured value of the product volume flow rate in accordance with a control value for the relevant product to be prepared prestored in a memory of control system 17.

Valve 30 comprises in this embodiment a needle valve with a conical needle 31 as valve member which protrudes fittingly in a passage opening 35 in valve housing 36 of valve 30 but which is axially movable therein in order to pinch passage opening 35 to greater or lesser extent or leave it wholly clear. In a first extreme position, see figure 3B, conical needle 31 protrudes into passage opening 35, and this latter is thus substantially fully closed, while in a second extreme position, see figure 3A, needle 33 is fully retracted from the passage opening in order to leave opening 35 completely clear.

Needle 31 extends axially from a screw spindle 32 which engages in a corresponding spindle cavity 33, see also figure 2. Spindle 32 is coupled in turn to an actuator in the form of an electronic stepping motor 38 which is likewise controlled by control system 17. A shaft part 341,342 with an axially adjustable length is provided in coupling 34 between stepping motor 38 and spindle 32. This shaft part comprises for this purpose two mutually telescopic parts 341,342 which are driven apart by a spring 343 but which, counter to the spring pressure, can make a stroke toward each other which is sufficient to be able to displace the spindle 32 and needle 31 between a position wholly out of passage 35 of the valve and fully into passage 35. These extreme positions are shown in detail in the respective cross-sections of figures 3A and 3B. All intermediate positions therebetween can also be set by proportional control of stepping motor 38.

Control system 17 drives needle 31 to greater or lesser extent outward on the basis of the volume flow measured by sensor 25 in order to thus adjust the system resistance of the device to and hold it at a value which is desired and predetermined as such. Different system resistances can optionally be utilized here during parts of a preparation cycle with a view to a desired coffee quality and/or coffee speciality. As a result of the resistance applied by valve 30 possible fluctuations in a resistance of coffee bed 125 thus have comparatively less influence on the overall resistance of the system and can be at least partially compensated by means of the controllable restriction.

At an end of a preparation cycle control system 17 preferably fully opens restriction 30 briefly in order to prevent scaling and blockage therein. For a thorough cleaning the device is moreover provided with a flush conduit wherein hot water can be guided from the boiler as flushing water through the system under the control of the control system. For the sake of clarity neither the flushing conduits and control valves applied for this purpose nor a system of control valves in the decoction system are further shown in figure 1, but are also present in reality.

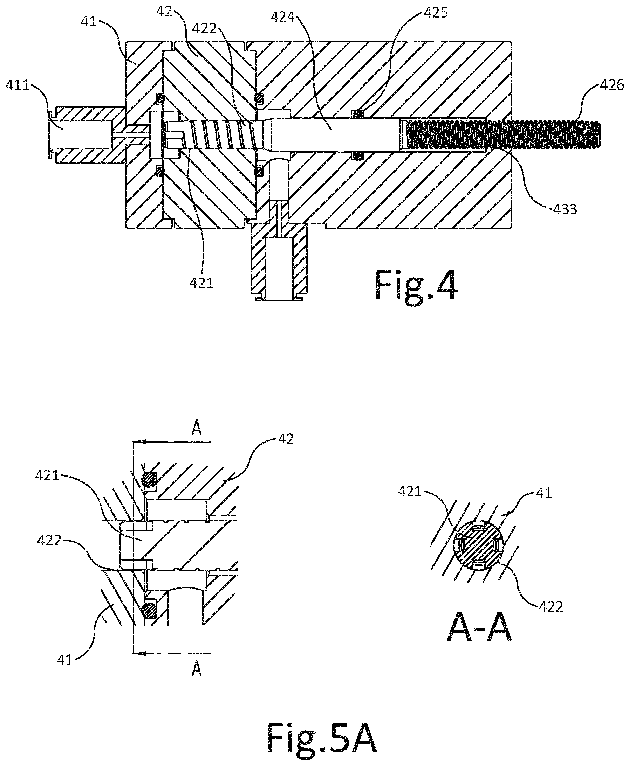

The present invention is by no means limited to application of the valve device shown in figure 2. Shown therefore by way of example in figure 4 is an alternative valve device which can be applied within the scope of the invention. The valve device here comprises an integral system component with an inlet chamber 41, a valve housing 42 and an outlet chamber 43 which connect seamlessly to each other and are connected liquid-tightly to each other via gaskets provided for the purpose. Inlet chamber 41 comprises a connection 411 for product conduit 20 upstream of the valve, while a corresponding connection 433 is provided on outlet chamber 43 for a downstream connection of product conduit 20.

Present in valve housing 42 is a central bore 421 in which a valve member 422 is axially movable in close-fitting manner. The valve member essentially comprises a cylindrical valve body which is provided in a peripheral wall with a groove 423 which spirals around a cylinder axis of the body. Groove 423 thus forms a liquid channel which runs helically with a pitch and at an angle between an inner wall of bore 421 and the peripheral wall of valve body 422. This channel is longer per running millimetre of valve body 422 by being given a smaller pitch and/or a greater inclination to the cylinder axis; at a larger pitch and/or smaller inclination this channel will be comparatively shorter per running millimetre of valve body 422.

Valve body 422 extends from a retaining needle 424 which protrudes through a bore of outlet chamber 43 and closes leakage-tightly therein via an O-ring 425. Retaining needle 424 is in turn coupled to a threaded end 426 with a defined pitch. The threaded end is received in a complementary threaded bore of outlet chamber 433 and driven by a stepping motor (not shown). A rotation of the stepping motor is thus translated into an axial displacement of valve body 422 in valve cavity 421, this displacement being determined by the pitch of threaded end 426.

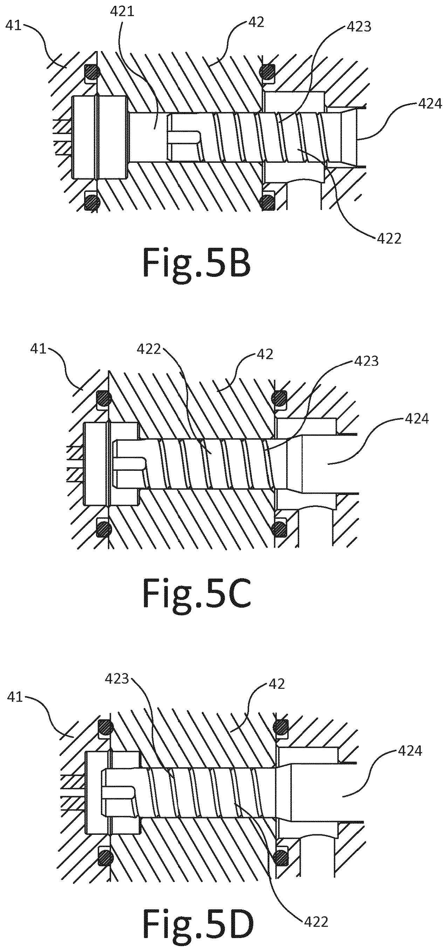

As a result of this axial displacement valve body 422 protrudes further or less far into valve cavity 421. This is shown for different positions in figures 5A-5D. In a first extreme position, figure 5A, the valve body still lies wholly outside valve cavity 421 and the valve offers no resistance at all. The valve is now fully open. When however valve body 422 is received in the valve cavity, figure 5B, the liquid is forced through the helical channel formed between the inner wall of cavity 421 and an outer wall of valve body 422 by the groove 423 arranged therein. The flow resistance hereof depends on an active cross-section, transversely of the liquid flow, of the channel in combination with a length of the channel. This latter is determined by the extent to which the valve body protrudes into the valve cavity, and is therefore proportionally adjustable during operation of the device. The stepping motor is controlled for this purpose by control system 17. A variation in this resistance per revolution is determined here by the variation caused thereby in the length of the liquid channel, which is in turn imposed by the pitch and inclination of the helix along which the groove 423 runs in the wall of the valve body. This resistance is maximal in the situation shown in figure 5C, wherein the liquid has to follow the full path through groove 423; while in figure 5D the valve is even fully closed because groove 423 ends here against the wall of valve cavity 421.

Control system 17 drives valve body 422 further or less far outward on the basis of the volume flow measured by sensor 25 in order to thus adjust the system resistance of the device to and hold it at a value which is desired and predetermined as such. Different system resistances can optionally be utilized here during parts of a preparation cycle with a view to a desired coffee quality and/or coffee speciality.

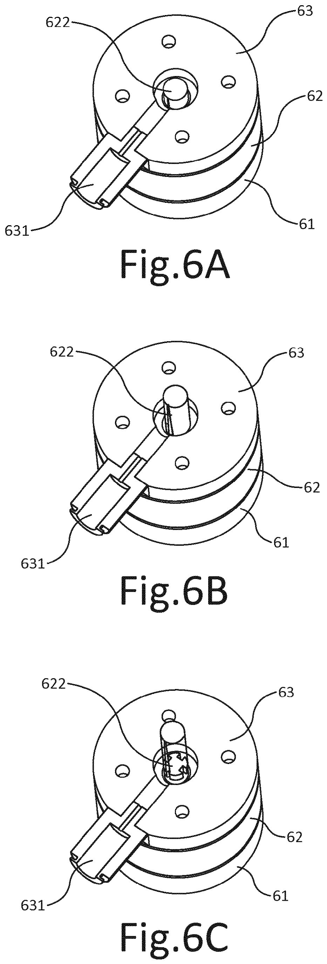

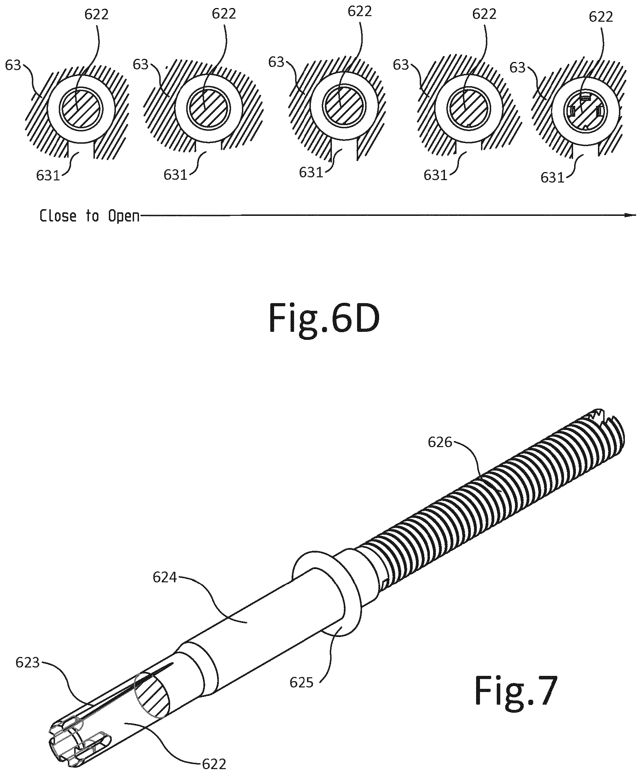

A third variant of the valve device is shown in figures 6A-6C in association with figure 7. The rough structure of the valve device is similar to that of the second embodiment with an inlet chamber 61, a valve housing 62 and an outlet chamber 63 on which a downstream connection 631 for product conduit 20 is provided. The inlet chamber has a corresponding upstream connection not shown in the drawing.

Protruding in this embodiment into a central bore 631 of the valve housing is a needle 632 which is received close-fittingly therein but which is axially movable therein. At an outer end one or more V-shaped grooves 623 are arranged in a peripheral wall of this needle 622, see also figure 7. This groove or grooves 623 open at a free end of needle 622 into outlet chamber 63 and thus define a liquid channel imposed on the liquid.

In similar manner as in the second exemplary embodiment needle 632 extends via a shaft part 624 from a threaded end 626 which is coupled to a stepping motor. An O-ring 625 here provides a desired liquid barrier in valve cavity 631. The stepping motor is controlled by control system 17 of the device, whereby needle 622 is released further or less far from valve cavity 631. Not only a length of the channel but also an average active width/cross-section is thus adjusted proportionally. As shown in enlarged view in figure 7, the V-groove or V-grooves narrow further inward from the free distal end of needle 622, whereby the active cross-section of the groove or grooves 623 gradually becomes narrower/smaller in this direction. A proportional fine adjustment of the liquid resistance of the valve is thus possible, varying from the fully closed situation shown in figure 6A to the substantially opened situation shown in figure 6C. Between these the valve can be pinched proportionally, such as in the half-open situation shown in figure 6B.

Although the invention has been further elucidated above on the basis of only several exemplary embodiments, it will be apparent that the invention is by no means limited thereto. On the contrary, many variations and embodiments are still possible within the scope of the invention for a person with ordinary skill in the art.

## Claims

1. Device for preparing a coffee product, comprising a preparation chamber (135) which is intended and configured to receive and collect a quantity of ground coffee in a coffee bed (139), and
provided with pump means (15) for carrying hot water under increased pressure to the preparation chamber, wherein the preparation chamber is provided with a water inlet (136) for admitting water at increased temperature and pressure on a feed side of the coffee bed, wherein the preparation chamber is provided with an outlet (137) on a discharge side beyond the coffee bed,
wherein the outlet is coupled via a product conduit (20) to an outflow at which the coffee product can be taken away, and wherein the device is provided with an electronic control system (17) which imposes a preparation cycle each time a product is prepared, between the outlet of the preparation chamber and the outflow at which the coffee product can be taken away the product conduit comprises an adjustable valve device with an adjustable restriction, a smallest passage of which is proportionally adjustable and controlled by the control system, wherein the valve device comprises a liquid channel between a valve member(422) and a valve housing (36, 42),
wherein a flow resistance of the liquid channel is controllable by the control system through an adjustment of the valve member relative to the valve housing, **characterized in that** the valve housing comprises a valve cavity (421, 631) and the valve member comprises a valve body received close-fittingly in the valve cavity, wherein the liquid channel is formed between an inner wall of the receiving cavity and an outer wall of the valve body, and that the valve body is adjustable relative to the receiving cavity, and that the liquid channel extends in at least one groove (423, 623) in at least one of the inner wall of the valve cavity and the outer wall of the valve body received therein.

2. Device as claimed in claim 1, **characterized in that** a flow sensor (25) is provided therein in order to measure a magnitude of a volume flow of the product and to generate this as electronic value to the control system, wherein the control system regulates the restriction subject to the measured magnitude of the volume flow.

3. Device as claimed in claim 2, **characterized in that** the flow sensor (25) is received between the outlet and the outflow in the product conduit.

4. Device as claimed in any one of the preceding claims , **characterized in that** a length of the channel is adjustable by an axial movement of the valve body to a position at least partially outside the valve cavity.

5. Device as claimed in any one of the preceding claims, **characterized in that** the valve body comprises a cylinder body and that the groove runs helically in the outer wall thereof.

6. Device as claimed in any one of the claims 1-4, **characterized in that** the groove extends from an outer end of the valve body in axial direction over at least a part of a length of the valve body in the outer wall thereof and narrows in doing so.

7. Device as claimed in claim 6, **characterized in that** the groove is V-shaped in both a lateral section and a cross-section and widens toward the outer end.

8. Device as claimed in one or more of the foregoing claims, **characterized in that** the control system imposes that the restriction is at least substantially fully opened at least briefly within the preparation cycle.

9. Device as claimed in one or more of the foregoing claims, **characterized in that** the control system imposes on the restriction a number of predetermined positions, each for a specific period of time, during a preparation cycle.

10. Device as claimed in claim 9, **characterized in that** the control system comprises an electronic memory in which at least a recipe is stored which is retrievable by the control system and which defines the positions and an associated time duration within the preparation cycle.

11. Device as claimed in claim 10, **characterized in that** the control system comprises a user interface which enables a user to select a recipe from a number of recipes and assign this to the control system.

## Patentansprüche

1. Vorrichtung zum Zubereiten eines Kaffeeprodukts, mit einer Zubereitungskammer (135), die dazu bestimmt und konfiguriert ist, eine Menge gemahlenen Kaffees in einem Kaffeebett (139) aufzunehmen und zu sammeln, und die mit einer Pumpeinrichtung (15) versehen ist, um heißes Wasser unter erhöhtem Druck zu der Zubereitungskammer zu befördern, wobei die Zubereitungskammer mit einem Wassereinlass (136) versehen ist, um Wasser mit erhöhter Temperatur und erhöhtem Druck auf einer Zufuhrseite des Kaffeebetts einzulassen, wobei die Zubereitungskammer mit einem Auslass (137) auf einer Abgabeseite jenseits des Kaffeebetts versehen ist, wobei der Auslass über eine Produktleitung (20) mit einem Ausfluss gekoppelt ist, an dem das Kaffeeprodukt entnommen werden kann, und wobei die Vorrichtung mit einem elektronischen Steuersystem (17) versehen ist, das jedes Mal, wenn ein Produkt zubereitet wird, einen Zubereitungszyklus erzwingt, wobei die Produktleitung zwischen dem Auslass der Zubereitungskammer und dem Ausfluss, an dem das Kaffeeprodukt entnommen werden kann, eine einstellbare Ventileinrichtung mit einer einstellbaren Drossel umfasst, deren kleinster Durchgang mit dem Steuersystem proportional einstellbar ist und gesteuert wird, wobei die Ventileinrichtung einen Flüssigkeitskanal zwischen einem Ventilelement (422) und einem Ventilgehäuse (36, 42) aufweist, wobei ein Strömungswiderstand des Flüssigkeitskanals durch das Steuersystem durch eine Einstellung des Ventilelements relativ zum Ventilgehäuse steuerbar ist, **dadurch gekennzeichnet, dass** das Ventilgehäuse einen Ventilhohlraum (421, 631) und das Ventilelement einen Ventilkörper umfasst, der eng anliegend in dem Ventilhohlraum aufgenommen ist, wobei der Flüssigkeitskanal zwischen einer Innenwand des Aufnahmehohlraums und einer Außenwand des Ventilkörpers gebildet ist, und dass der Ventilkörper relativ zu dem Aufnahmehohlraum einstellbar ist, und dass sich der Flüssigkeitskanal in mindestens einer Nut (423, 623) in mindestens einer der Innenwand des Ventilhohlraums und der Außenwand des darin aufgenommenen Ventilkörpers erstreckt.

2. Vorrichtung wie im Anspruch 1 beansprucht, **dadurch gekennzeichnet, dass** ein Durchflusssensor (25) darin vorgesehen ist, um eine Größe eines Volumenstroms des Produkts zu messen und diesen als elektronischen Wert für das Steuersystem zu erzeugen, wobei das Steuersystem die Drossel in Abhängigkeit von der gemessenen Größe des Volumenstroms regelt.

3. Vorrichtung wie im Anspruch 2 beansprucht, **dadurch gekennzeichnet, dass** der Durchflusssensor (25) zwischen dem Auslass und dem Ausfluss in der Produktleitung aufgenommen ist.

4. Vorrichtung wie in einem der vorhergehenden Ansprüche beansprucht, **dadurch gekennzeichnet, dass** eine Länge des Kanals durch eine axiale Bewegung des Ventilkörpers in eine Position zumindest teilweise außerhalb des Ventilhohlraums einstellbar ist.

5. Vorrichtung wie in einem der vorhergehenden Ansprüche beansprucht, **dadurch gekennzeichnet, dass** der Ventilkörper einen Zylinderkörper umfasst und dass die Nut schraubenförmig in dessen Außenwand verläuft.

6. Vorrichtung wie in einem der Ansprüche 1-4 beansprucht, **dadurch gekennzeichnet, dass** sich die Nut von einem äußeren Ende des Ventilkörpers in axialer Richtung über mindestens einen Teil einer Länge des Ventilkörpers in dessen Außenwand erstreckt und sich dabei verengt.

7. Vorrichtung wie im Anspruch 6 beansprucht, **dadurch gekennzeichnet, dass** die Nut sowohl im Seitenschnitt als auch im Querschnitt V-förmig ist und sich zum äußeren Ende hin erweitert.

8. Vorrichtung wie in einem oder mehreren der vorangehenden Ansprüche beansprucht, **dadurch gekennzeichnet, dass** das Steuersystem vorschreibt, dass die Drossel zumindest kurzzeitig innerhalb des Zubereitungszyklus zumindest im Wesentlichen vollständig geöffnet ist.

9. Vorrichtung wie in einem oder mehreren der vorhergehenden Ansprüche beansprucht, **dadurch gekennzeichnet, dass** das Steuersystem der Drossel eine Anzahl vorbestimmter Positionen während eines Zubereitungszyklus auferlegt, jede für eine bestimmte Zeitspanne.

10. Vorrichtung wie in Anspruch 9 beansprucht, **dadurch gekennzeichnet, dass** das Steuersystem einen elektronischen Speicher umfasst, in dem mindestens ein Rezept gespeichert ist, das durch das Steuersystem abrufbar ist und das die Positionen und eine zugehörige Zeitdauer innerhalb des Zubereitungszyklus definiert.

11. Vorrichtung wie in Anspruch 10 beansprucht, **dadurch gekennzeichnet, dass** das Steuersystem eine Nutzerschnittstelle umfasst, die einem Nutzer ermöglicht ein Rezept aus einer Anzahl von Rezepten auszuwählen und dieses dem Steuersystem zuzuordnen.

## Revendications

1. Dispositif pour la préparation d'un produit de café, comprenant une chambre de préparation (135) destinée et configurée pour recevoir et recueillir une quantité de café moulu dans un lit de café (139), et pourvue d'un moyen de pompage (15) pour acheminer de l'eau chaude sous pression accrue vers la chambre de préparation, la chambre de préparation étant pourvue d'une entrée d'eau (136) pour admettre de l'eau à température et pression élevées du côté de l'alimentation du lit de café, la chambre de préparation étant pourvue d'une sortie (137) du côté de l'évacuation, au-delà du lit de café, la sortie étant reliée par un conduit de produit (20) à un écoulement où le produit de café peut être emporté, et le dispositif étant pourvu d'un système de commande électronique (17) qui permet d'imposer un cycle de préparation chaque fois qu'un produit est préparé, entre la sortie de la chambre de préparation et l'écoulement où le produit de café peut être emporté, le conduit de produit comprenant un dispositif de soupape réglable avec une restriction réglable, dont un plus petit passage est proportionnellement réglable et contrôlé par le système de commande, le dispositif de soupape comprenant un canal de liquide entre un élément de soupape (422) et un boîtier de soupape (36, 42), une résistance à l'écoulement du canal de liquide étant contrôlable par le système de commande par un ajustement de l'élément de soupape par rapport au boîtier de soupape, **caractérisé par le fait que** le boîtier de soupape comprend une cavité de soupape (421, 631) et que l'élément de soupape comprend un corps de soupape reçu de manière ajustée dans la cavité de soupape, le canal de liquide étant formé entre une paroi intérieure de la cavité de réception et une paroi extérieure du corps de soupape, le corps de soupape étant réglable par rapport à la cavité de réception, et le canal de liquide s'étendant dans au moins une rainure (423, 623) dans au moins une des parois intérieures de la cavité de soupape et la paroi extérieure du corps de soupape qui y est reçu.

2. Dispositif selon la revendication 1, **caractérisé par** la présence d'un capteur de débit (25) permettant de mesurer l'ampleur du débit volumétrique du produit et de le transmettre au système de commande sous forme de valeur électronique, le système de commande régulant la restriction en fonction de l'ampleur mesurée du débit volumétrique.

3. Dispositif selon la revendication 2, **caractérisé par le fait que** le capteur de débit (25) est reçu entre la sortie et l'écoulement dans le conduit de produit.

4. Dispositif selon l'une quelconque des revendications précédentes, **caractérisé par le fait qu'**une longueur du canal est réglable par un mouvement axial du corps de soupape jusqu'à une position au moins partiellement extérieure à la cavité de soupape.

5. Dispositif selon l'une quelconque des revendications précédentes, **caractérisé par le fait que** le corps de soupape comprend un corps cylindrique et que la rainure s'étend de manière hélicoïdale dans la paroi extérieure de celui-ci.

6. Dispositif selon l'une des revendications 1 à 4, **caractérisé par le fait que** la rainure s'étend à partir d'une extrémité extérieure du corps de soupape en direction axiale sur au moins une partie de la longueur du corps de soupape dans la paroi extérieure de celui-ci et ce faisant se rétrécit.

7. Dispositif selon la revendication 6, **caractérisé par le fait que** la rainure est en forme de V à la fois dans une section latérale et dans une section transversale et qu'elle s'élargit vers l'extrémité extérieure.

8. Dispositif selon l'une ou plusieurs des revendications précédentes, **caractérisé par le fait que** le système de commande permet d'imposer que la restriction soit au moins sensiblement entièrement ouverte au moins brièvement au cours du cycle de préparation.

9. Dispositif selon l'une ou plusieurs des revendications précédentes, **caractérisé par le fait que** le système de commande permet d'imposer à la restriction un certain nombre de positions prédéterminées, chacune pendant une durée déterminée, au cours d'un cycle de préparation.

10. Dispositif selon la revendication 9, **caractérisé par le fait que** le système de commande comprend une mémoire électronique dans laquelle est stockée au moins une recette qui peut être consultée par le système de commande et qui permet de définir les positions ainsi qu'une durée de temps associée dans le cycle de préparation.

11. Dispositif selon la revendication 10, **caractérisé par le fait que** le système de commande comprend une interface utilisateur qui permet à un utilisateur de sélectionner une recette parmi un certain nombre de recettes et de l'attribuer au système de commande.
